# EUROPEAN PATENT APPLICATION

(11) **EP 2 549 603 A1**
(43) Date of publication of application: **23.01.2013**
(21) Application number: 11425219.0
(22) Date of filing: 09.08.2011
(51) Int. Cl.: H02G 3/06, H02G 3/08

(54) **Multipurpose jointing element between tubes and boxes, in particular for electrical systems**

(30) Priority: 21.07.2011 IT BS20110043 U
(71) Applicant: AVE S.p.A., 25086 Rezzato (BS) (IT)
(72) Inventor: Remonti, Danilo, 25086 Tezzato (BS) (IT)
(74) Representative: Sangiacomo, Ines

(57) **Abstract**

The invention relates to a jointing element between tubes and boxes, in particular for electrical systems, having a body (2) provided with a longitudinal recess (3), the element comprising an intermediate throat (5) outside the body, intended for sealingly coupling with the outline of a hole (51) obtained in the wall of a box - shaped structure (50); a first portion (10), developing from a portion of said throat; a second portion (20), developing from the opposite side of said throat relatively to the first portion and ending with an inlet (6) into said recess, a diametric wall (11) closing said longitudinal recess. The second portion is configured to define several inner seats (31, 32, 33) of different diameter in said recess and it includes several annular diaphragms (41, 42, 43) extending radially inside the recess each from a respective seat (31, 32, 33), each diaphragm defining a passing port having a respective diameter and being configured to sealingly couple with a tube (71, 72, 73), to be inserted into said recess, having a compatible diameter with to the respective diameter of the passing port of the diaphragm.

## Description

The present invention relates to a jointing element between tubes and watertight boxes used in particular in the field of electrical systems.

Jointing elements are known, such as of the type shown in the document IT-221210, in the name of the Applicant, as well as other different kinds widely available in the market.

These elements, named "cable sleeves" in jargon, allow to realize a joint between a tube, usually a corrugated tube, wherein one or more electric cables passes, and an electrical box, both of the built-in and the wall type, and/or for electrical panels or switchboards. Mostly, the elements are composed as a single hollow piece made of elastic material such as rubber, externally provided with a peripheral throat and internally with an axial recess that is opened at a first side and closed at a second side opposite to the first side. In use, the jointing element is positioned and engaged by the peripheral throat, in an appropriate hole of an electrical box so that one end of the electrical tube intended to be combined with the box can be inserted into the first open side and the electric cables passing through the tube can come inside the box through an opening carried out in the closed side of the element.

Then the first side is outside of the box whereas the second side is faced inside the box.

It is also possible to use the jointing elements as a "cap" for the closure of a hole on an electrical box but not used for the passing of electric cables. In this case the jointing element is applied to the box inside out relatively to the previous use, that is with the first side inside the box (obviously without combining any electrical tube) and the second side closed out of the box.

It has been found, however, that the current jointing elements between tubes and boxes, in particular for electrical systems, can be improved in several aspects mostly including thermal - acoustic insulation and energy saving.

In fact in the known elements the respective side intended for accommodating the electrical tube has a determined diameter, making them suitable for the insertion of tubes only having such a determined diameter.

The disadvantage is that the user must then be provided with a range of jointing elements having different diameters from the insertion side of the tube, from which to choose the appropriate element for each specific application from time to time. This can be a source of problems, such as a poor convenience for the user, a high manufacturing cost due to the number of molds to be prepared for the realization of elements with different diameters, higher inventory costs due to the need of storing jointing elements for several diameters, and significant total burdens at least for the need of realizing different molds.

That being stated, the object of the present model is to propose and provide a cable sleeve i.e. a jointing element between tubes and boxes able to overcome the drawbacks mentioned above.

More specifically, the purpose of the present invention is to provide a multipurpose jointing element to be used selectively both for the stable joint between a tube and a built-in or wall electrical box and/or wall switchboards and for hermetically closing a hole of an electrical box, in both cases ensuring a proper seal.

Another object of the invention is to provide a jointing element able to couple advantageously with corrugated tubes having different diameters.

A further object of the invention is to provide a jointing element simple to implement, able to reduce the costs associated with production and storage steps thereof, and being able to make practical advantages in the use step.

Advantageously, the jointing element herein proposed is structured in such a way as to ensure, either as a cable sleeve or as a cap, in both applications, the waterproofing of the tube - box joint or cap - box coupling, respectively. In such a way it is possible to prevent leakages of air and/or water through the holes of the boxes, that could lead to deterioration, malfunctions or failures of the electrical system, and ultimately also to achieve advantages about energy improvements for hollow walls.

The afore said objects and advantages are obtained by a jointing element between tubes and electrical boxes having the technical specifications contained in one or more of the attached claims, each of which taken alone (without the corresponding dependencies) or in any combination with the other claims, as well as according to the following aspects and/or exemplary embodiments, variously matched, even with the afore said claims.

Basically, the jointing element according to the invention consists of a one-piece body provided with a longitudinal recess and comprises:
- an intermediate outer throat, intended for sealingly coupling with the outline of a hole obtained in the wall of a box - shaped structure;
- a first portion, developing from a portion of said throat;
- a second portion, extending from the opposite side of said throat relatively to the first portion and ending with an inlet into said recess for the insertion of a tube in said axial recess;
- a diametric wall closing the recess,
where the second portion is configured to define several inner seats of different diameter in the recess and it includes several annular diaphragms extending radially inside said longitudinal recess each from a respective seat, said diaphragms being parallel spaced and each diaphragm defining a port having a different diameter from that of the other diaphragms, each diaphragm defining a passing port having a respective diameter and being configured to sealingly couple with a tube, to be inserted into said recess, having a compatible diameter with to the respective diameter of the passing port of the diaphragm.

Advantageously, the combination of the afore said technical specifications allows to obtain a jointing element with the characteristics of universality and easiness of use allowing it to be used for several applications. In fact, in primis, the realizing of the element as a single piece (with two distinct portions from opposite sides with respect to the throat) allows the use thereof both as a cable sleeve and as a cap, according to the mounting way of the element into the hole, that is based on which portion will be inside the box. In addition, there is the ability to combine selectively tubes of different diameters to the same jointing element due to the presence of annular diaphragms each capable of receiving a tube of corresponding diameter and holding it in axial direction contrary to pull out.

Additional features and advantages will be evident from the following description made with reference to the attached drawings, provided for illustration purposes only and thereby not limitative, wherein:
Figures 1, 2 and 3 show as many section views of a box for electrical systems provided with a jointing element, used as a cable sleeve, in which tubes of different diameters are connected;
Figure 4 shows a box for electrical systems provided with jointing element used as a cap; and
figure 5 shows a lateral section view of another directions for use of the jointing element as a cable sleeve; and
figure 6 shows the jointing element in another configuration.

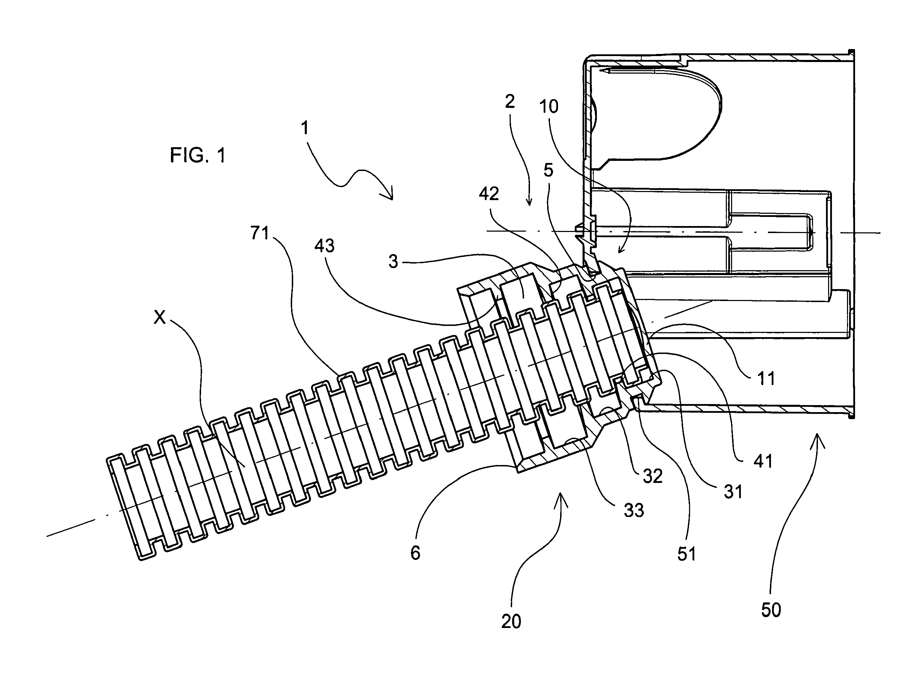

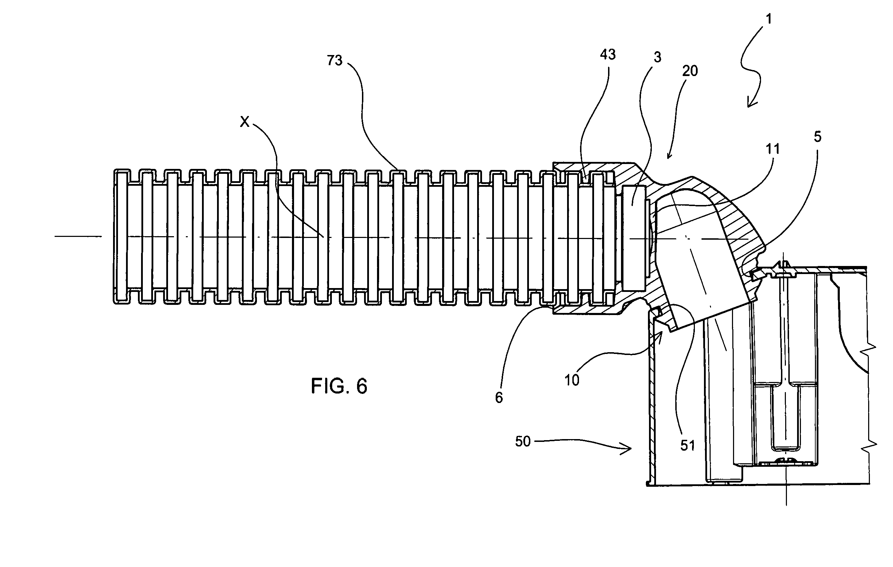

Since that similar or equivalent parts correspond to similar reference number in each depiction, the jointing element herein proposed, generically indicated with 1, is composed of a one-piece body 2 able to be realized by appropriate technologies, such as by molding, and able to be substantially straight as in figures 1 - 5 or angled, that is with an elbow shape, as in fig. 6.

In any case, the jointing element 1 is provided with a longitudinal recess 3 and in general, because of the use with tubes of circular section, its overall shape is that of a solid with a X axis, wherein, in the embodiments illustrated in figures 1 - 5, the X axis is straight and the element 1 has an approximately cylindrical overall shape, whereas in the embodiment of Figure 6 the X-axis is broken, being defined by two incident segments encountering inside the longitudinal recess 3.
In particular, the body 2 of the jointing element 1 presents on the outside an intermediate throat 5 that, in use, is sealingly coupled with the outline of a hole 51 obtained in the wall of a box - shaped structure 50. Said body 2 also has a first portion 10, developing from a part of the intermediate throat 6, and a second portion 20, developing from the opposite side of said throat relatively to the first portion and ending with an inlet 6, or mouth, to the axial recess 3. Internally, said body has a diametric wall 11 closing the longitudinal recess 3. In the embodiment of figure 1 - 5, this closing wall 11 is at the front of the first portion, i.e. the end of the first portion distal from the throat, whereas in the embodiment of Figure 6, the closing wall 11 is in an intermediate position between the opposite ends of the first and second portion. As shown in Figures 1 - 3, the second portion 20 of the jointing element 1 is configured to define inside the longitudinal recess 3 a plurality of seats 31, 32 and 33 with increasing diameters from the closing wall 11 towards the opening 6 of said axial recess 3. More precisely, it presents a plurality of annular diaphragms 41, 42 and 43, extending radially into the recess from each respective seat 31, 32 and 33. Such diaphragms are spaced one another in parallel from a first diaphragm 41 close to the closing wall 11 up to a last diaphragm 43 close to the entry 6 of the longitudinal recess 3.

Each annular diaphragm 41, 42 and 43 defines a passing port having a respective diameter different from the diameter of the port of every other diaphragm. In particular, the annular diaphragm 41 closest to the closing wall has a port with a smaller diameter than said intermediate annular diaphragm 42 and the latter has a port with a smaller diameter than the port of the annular diaphragm 43 nearest the mouth of the recess 3. Each diaphragm is intended for sealingly coupling with a tube 71, 72 or 73 having a diameter compatible with the diameter of the corresponding passing port. In particular, the jointing element, when used as a cable sleeve, is then able to accommodate from time to time and according to requirements the tube ends of different diameters, namely a tube 71 or 72 or 73 with a diameter compatible with those of the seats 31, 32, 33 and the respective seats 41, 42,43.

In addition, the closing wall 11 can be knocked down, for example, doing an appropriate cutting, to allow the passage towards the inside of the box of the cable (s) - not represented - inserted in the tube from time to time connected to the jointing element 1.

The element 1 is preferably made of an elastic material, such as rubber, so it could be inserted by pressure in a hole of an electrical box 50 for its use. When entering the element body is elastically deformed and, once the edge of the hole 51 of the box has stabilized in the peripheral throat 5, the coupling is sealed.

As shown in the exemplary embodiment illustrated in figures 1 - 3, the passing port defined by each diaphragm 41, 42, 43 is smaller than the inner diameter of the recess at the respective seat 31, 32, 33. In this way each diaphragm realizes a substantially "undercut" which is counter-shaped at the alternating ridge - valley of a corrugated tube. The insertion by pressure of such a tube in the recess leads the following ridges of the corrugated tube to cross the undercut, until the head of the tube reaches the following diaphragm or the closing wall of the first portion. When the insertion is completed, the two adjacent ridges of the tube, and including the valley between them, are engaged by the respective diaphragm, with a geometric interference ensuring air-tight and preventing accidental pull out of the tube from the element.

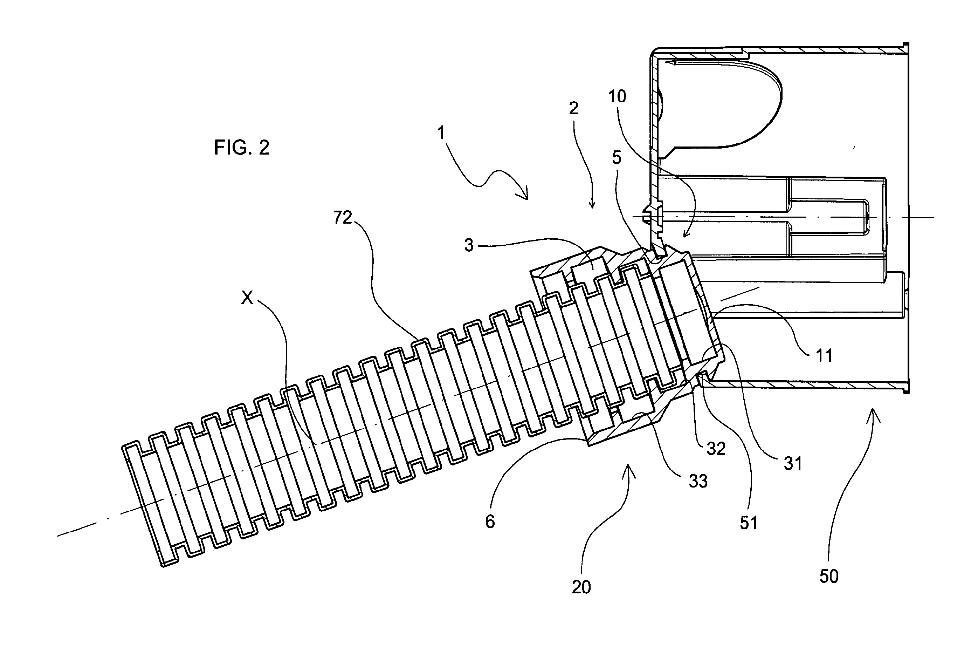

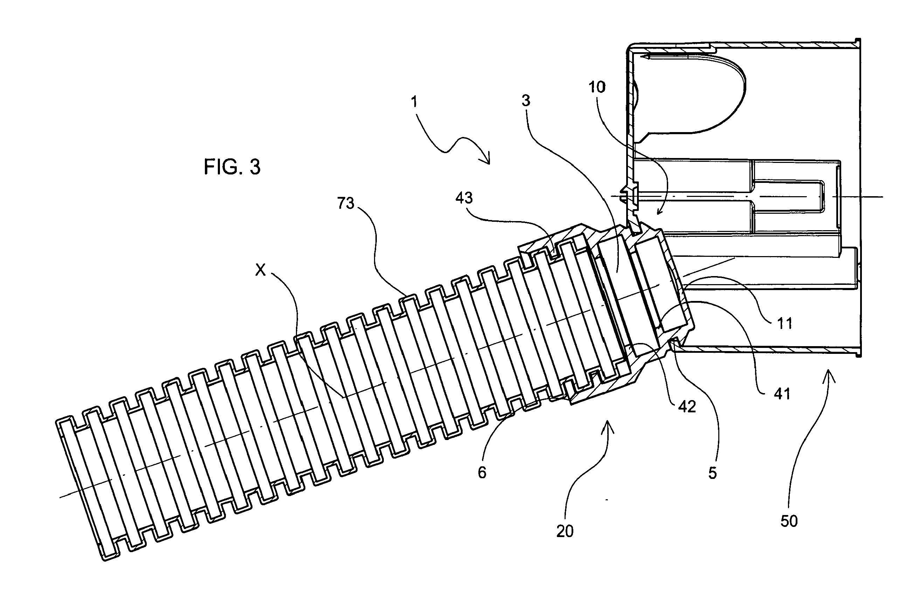

For example, in Figure 1, the first diaphragm 41 defines the smallest diameter of the three diameters provided by the element 1, and therefore the corrugated tube 71 rabbets up to to the closing wall 11. In figure 2 the second diaphragm 42 defines an intermediate diameter and the corrugated tube 72 abuts against the first diaphragm and it is sealingly coupled with the second diaphragm. In figure 3 the third diaphragm 43 defines the greatest diameter between the diameters provided by the element 1 and the shown corrugated tube 73 abuts against the entry of the second diaphragm and it is sealingly coupled with the third diaphragm. In the afore described cases the axial thickness of each diaphragm 41, 42 and 43 is substantially equal to the distance between each following ridge and valley of a corrugated tube.

It is evident that the coupling of a tube with the element 1 takes advantage of the elasticity of the element itself; in fact, when the tube is inserted by pressure inside the recess 3, following ridges of the corrugated tube exceed the diaphragms having diameter corresponding to the tube folding it repeatedly, until the tube head does not abut rabbetting at the diaphragm entry or the closing wall.

Typically the port defined by the diaphragm may be slightly smaller than the outside diameter of the tube passing through it. In such a way during the insertion the tube bends the diaphragm slightly, having elastic properties, towards the closing wall, and in its turn the diaphragm engages on the inserted tube carrying out a sealed coupling resistant against pull out.

Preferably, each diaphragm is provided with a countersink facing towards the insertion, that is towards the closing wall of the first portion. This will facilitate the insertion of the tube through the corresponding diaphragm aiding the afore said bending of the diaphragm; in fact the tube head finds in such a countersink an invitation for the passing through the diaphragm.

The jointing elements shown in Figure 1 - 3 can also be advantageously used with smooth tubes, in a similar manner as afore described for the corrugated tubes. In this case the tube insertion happens by sliding the outer surface of the tube and the diaphragm defining the corresponding diameter.

Preferably, the throat 5 is joined at least with the first portion 10 by a jointing angled surface, aiding the insertion of the first hole portion of the box until the edge of the hole does not collimate with the throat.

As an example, the inner diameters defined by the diaphragms of the second portion of the element 1 may be of 16 mm, 20 mm, 25 mm and 32 mm, or any other diameter, e.g. tube or cable diameters available on the market.

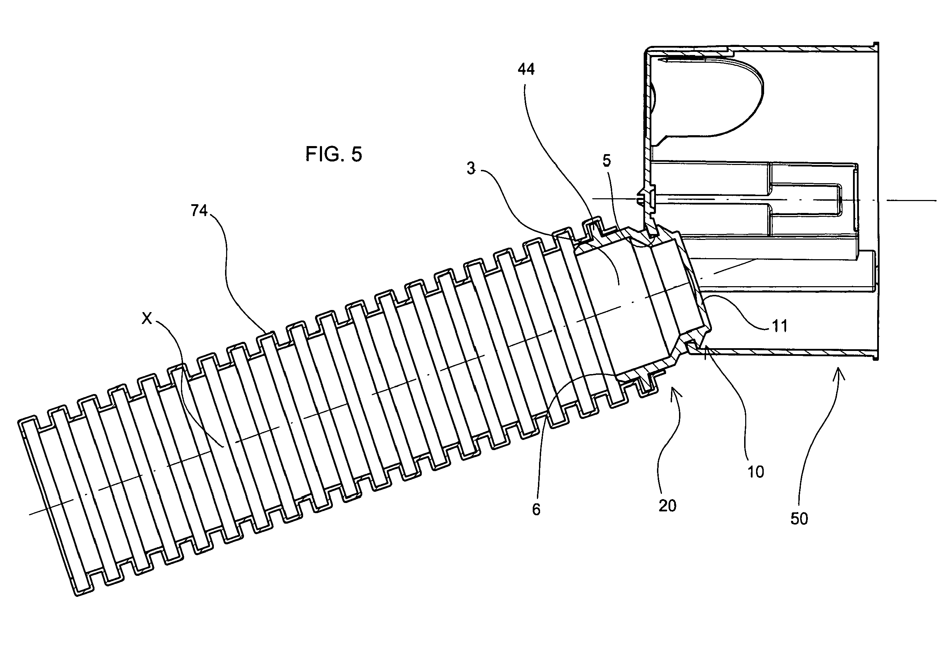

Figure 5 shows an alternative embodiment of the element 1, wherein at least an annular diaphragm 44 develops outside the second portion. In this case such a diaphragm defines a respective diameter corresponding to the inner diameter of a tube 74 to be associated with the box. The use is still similar to that afore described for the solution with diaphragms inside the recess (Figures 1 - 3), with the difference that in this case the airtight happens between the diaphragm and the inner surface of the tube. As shown in Figure 5, the diaphragm realizes an overcut with the surface of the second portion from which is jutting, so that the diaphragm would enter into a ridge between two inner valleys of a corrugated tube. In this configuration, in order to render the tubes connectible with different diameter on the same jointing element, the diameters defined by the diaphragms will be decreasing from the throat 5 to the opening 6 of the recess 6.

With reference to figures 1 - 3 and 5 the use of the jointing element 1 has been described as a cable sleeve, that is with the first portion 10 facing to the inside of the box and the second portion 20 to the outside of the box, so that the tube can be inserted inside the recess 3 and at least one cable sleeve extending in such a tube would pass inside the box - shaped structure 50, by a convenient cutting in the closing wall. In such a configuration, the first portion 10 takes up advantageously less space inside the box, whereas the second portion 20 is still accessible from the outside for applying a tube and any subsequent replacements of the same.

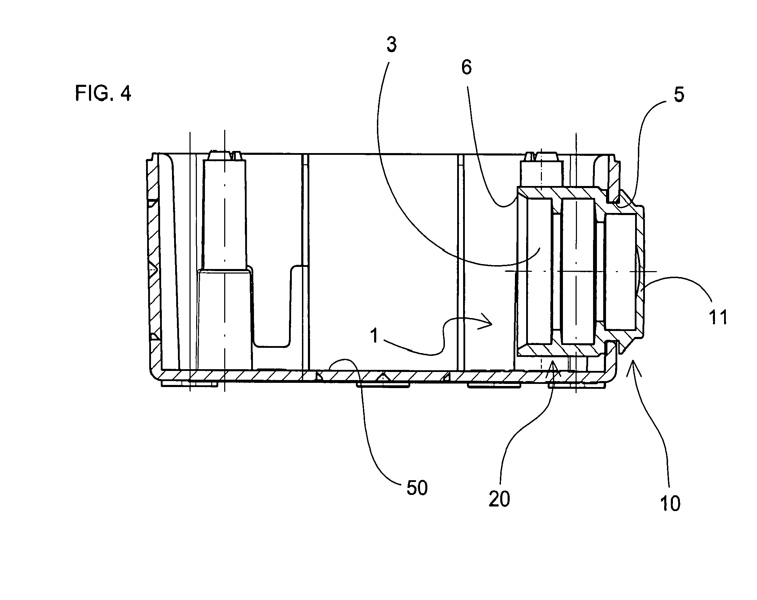

It is possible to use the jointing element 1 also with the cap functionality, as shown for example in Figure 4. In this case the element is turned upside down relatively to the use as a cable sleeve, with the second portion 20 inserted in the box, the edge of the hole inserted in the throat 5 and the first portion 10 protruding outside the box and with the closing wall free of cutting. When used as a cap, the second portion may advantageously be cut axially (removing a part with one or more of the afore said diaphragms) in order to reduce the bulk thereof inside the box, since it is not used for the insertion of any tube or cable.

In the embodiment of Figure 6, addressed to enable or ease particular installations, the jointing element has a first portion 10 and a second portion 20 that are angled to each other, so that the inlet 6 of the recess 3 is not in-line but angled relatively to the entry hole into the box where the jointing element is applied. In such a configuration (Figure 6), the diametric wall 11 closing the recess 3 is positioned inside the recess 3 beyond the afore mentioned annular diaphragms 41, 42 and 43 towards the end of the first portion 10. In other words, the diaphragms are all located in the second portion 20 whereas beyond the closing wall 11 there are no more diaphragms.

## Claims

1. Jointing element between tubes and boxes, in particular for electrical systems, having a body (2) provided with a longitudinal recess (3), the element comprising:
- an intermediate throat (5) outside the body, intended for sealingly coupling with the outline of a hole (51) obtained in the wall of a box - shaped structure (50);
- a first portion (10), developing from a portion of said throat;
- a second portion (20), developing from the opposite side of said throat relatively to the first portion and ending with an inlet (6) into said recess,
- a diametric wall (11) closing said longitudinal recess, and being **characterized in that**
- the second portion is configured to define several inner seats (31, 32, 33) of different diameter in said recess and it includes several annular diaphragms (41, 42, 43) extending radially inside the recess each from a respective seat (31, 32, 33), each diaphragm defining a passing port having a respective diameter and being configured to sealingly couple with a tube (71, 72, 73), to be inserted into said recess, having a compatible diameter with to the respective diameter of the passing port of the diaphragm.

2. Jointing element according to claim 1, wherein the closing diametric wall (11) can be at least partially knocked down to allow the passing inside the box - shaped structure (50) of at least one cable extending into the tube combined with the second portion of the element .

3. Jointing element according to claim 1 or 2, wherein the afore said seats (31, 32, 33) have increasing diameters from the closing wall towards the opening (6) of the longitudinal recess and the diameter of the passing port of the diaphragms increases starting from the diaphragm close to the closing wall (11) up to the diaphragm close to the opening of the longitudinal recess.

4. Jointing element according to any one of the preceding claims, wherein each diaphragm (41, 42, 43) is provided with a countersink facing the closing wall (11) of the first portion.

5. Jointing element according to any one of the preceding claims, wherein the jointing element can be used as a cable sleeve, that is with the first portion (10) facing the inside of the box - shaped structure (50) and the second portion (20) facing the outside of the box - shaped structure, or it can be used as a cap, with the second portion (20) facing the box - shaped structure and the first portion (10) projecting outwardly from the box - shaped structure and the intact closing structure (11).

6. Jointing element according to any one of the preceding claims made of an elastic material, such as rubber.

7. Jointing element according to any one of the preceding claims further comprising at least one more diaphragm developing outside the second portion for the coupling with the inner surface of a tube.

8. Jointing element according to any one of the preceding claims having a substantially straight body and wherein the diametric closing wall (11) of the longitudinal recess (6) is at the end of said first portion (10).

9. Jointing element according to any one of claims from 1 to 7 having a substantially elbow body and wherein the closing diametric wall (11) of the longitudinal recess (6) is in an intermediate part between the two opposite ends of said body.
